Europäisches Patentamt

European Patent Office

Office européen des brevets

(11) Numéro de publication: **0 485 680 A1**

# DEMANDE DE BREVET EUROPEEN

(21) Numéro de dépôt: 90500106.1

(22) Date de dépôt: **14.11.90**

(51) Int. Cl.5: **G01G 19/08**

(43) Date de publication de la demande:
**20.05.92 Bulletin 92/21**

(84) Etats contractants désignés:
**AT BE CH DE DK FR GB GR IT LI LU NL SE**

(71) Demandeur: **INVESTIGACION Y TRATAMIENTO, S.A.**
**Crta. Ajalvir-Torrejon km 0,900**
**E-28864 Ajalvir (Madrid)(ES)**

(72) Inventeur: **Fernandez Fauro, Francisco**
**CTRA. Ajalvir-Torrejon, KM. 0,900**
**E-28864 Ajalvir (Madrid)(ES)**

(74) Mandataire: **Gonzalez Gomez, Maria Virtudes**
**Aseprin, S.L., Santa Engracia, 65-2o Dcha.**
**E-28010 Madrid(ES)**

(54) **Système de surveillance de la charge d'un véhicule.**

(57) Système autoportant de contrôle de pesage de marchandises de véhicules, constitué à partir de la disposition de quelques éléments autoportants des circuits du système adaptés aux bandes du châssis avec des détecteurs accouplés aux cadres du véhicule lesquels, au moyen de leurs circuits, contrôlent le poids de la charge dans la caisse du véhicule.

Ces circuits son alimentés par la propre batterie du véhicule et sont connectés à des viseurs placés en lieu approprié, et permettent le contrôle visuel sélectif totalisé de la capacité ou charge en question, le système étant muni des prises, des commutateurs et de l'alimentation électrique nécessaires.

Fig. 1

EP 0 485 680 A1

Le présent enregistrement de Modèle d'Utilité concerne un système autoportant de contrôle de pesage de marchandises de véhicules, selon la description ci-après et ce concept sera toujours interprété dans son sense large et pas limitatif.

Ce résultat industriel a une efficacité améliorée par rapport à tout ce qu'on connaît et utilise actuellement à ce sujet, tant par sa simplicité de construction que d'application, de résistance, de durée, d'indéformabilité, de précision du procédé de contróle de poids, de complète manque de péril, de facilité d'accouplement dans n'importe quel type de véhicule de charge, d'esthétique et d'économie.

Il est bien connu que la capacité des vehicules, bien qu'ils transportent des marchandises que des fluides, pose des problèmes à leur passage par la Douane, dès le chargement et déchargement et d'autres opérations nécessaires pour le transport de marchandises ou de produits de n'importe quelle sorte ou nature.

Actuellement, le pesage de véhicules portant ces marchandises est fait en plaçant le dit véhicule sur d grandes bases de bascules, dans lesquelles les charges sont détectées avec précision, en considérant leurs nets.

Cela origine des retards, étant donné la lenteur de cette opération de contrôle, avec le préjudice en résultant pour les entreprises, pour les conducteurs et pour la conservation du produit, compte tenue de ce que, dans le cas des denrées périssables, il faut un minimum de temps pour transporter une charge maximale à de grandes distances, ce qui entraîne un risque matériel et personnel. Ce sont des circonstances à considérer et qui sont presque totalement éliminés avec l'avantageuse utilisation du pesage autonome, contrôlé visuellement dans la cabine de conduite et vérifié par un tiers, ce dernier étant tant un particulier qu'une Autorité quelconque.

Essentiellement, ce système est caractérisé en ce que sa simplicité d'adaptation sur n'importe quel type de véhicule de cette modalité, sans qu'il soit nécessaire de faire aucun type de modification ou de travail, car ses components se placent dans des espaces minimes.

Les éléments de détection visuelle et ceux de pesage occupent le moindre espace physique, et ils n'exigent pas l'emploi de moyens auxiliaires, mais seulement l'utilisation du propre circuit du véhicule pour l'alimentation de ces organes.

Ce qui a été exposé permet de se faire une bonne idée sur combien cette planification autonome est intéressante, puisque le système en question pourra être appliqué à tout type de carrosserie ou de châssis du mobile et de la cabine, même du type normalisé, sans aucune coïncidence d'une autre condition requise.

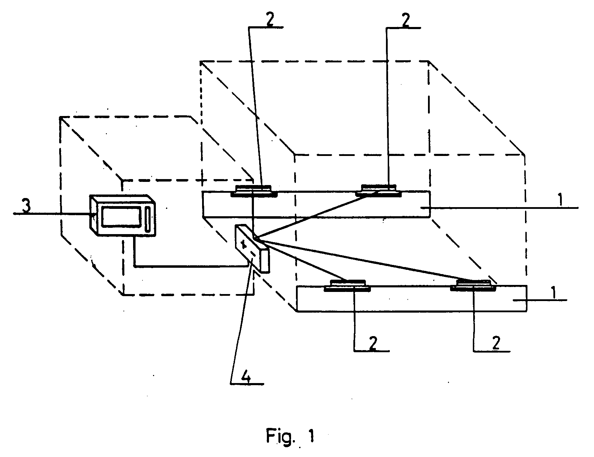

Ce modèle d'utilité sera mieux compris en regard de la description ci-après et du dessin annexé représentant, à titre d'exemple et en diagramme, tous les components intégrant ce système. Dans ce dessin, la figure unique est une vue schématique qui permet apprécier sa facilité de montage et d'utilisation, dans laquelle:

1.- Eléments autoportants des circuits du système, adaptés en deux bandes latérales du propre châssis et toujours sans aucune exigéance de modification ni travail additionnel, mais avec les détecteurs correspondants qui s'accouplent selon les caractéristiques des cadres du véhicule.

2.- Détecteurs électroniques montés dans le châssis et qui, en combinaison et d'accord avec la programmation des dits détecteurs à force gravitationnelle, accusent la pression exercée unitairement, laquelle est totalisée et envoyée à l'écran pour y être enregistrée et vérifié. Le nombre des détecteurs varie selon les dimensions, le tonnage, la forme fixe, basculante ou quelqu'autre modalité du véhicule de charge.

3.- Ecran de visualisation adapté à la cabine du véhicule et étant à la portée directe du champs visuel du conducteur ou de l'assistant, dans lequel, sur une échelle graphique, les valeurs totaux des poid reçus sont imprimés ou marqués.

Cet écran va constater les données de la tare, de la charge et du net pour une vérification formelle et véridique de la capacité réalisée. Et on pourra présenter une imprimante synchronisée à l'élément de contrôle formalisé d'une manière digne de foi et qui puisse rester comme une espèce de reçu même si la mémoire de l'ordinateur de l'écran est capable de mémoriser cette donnée chronologiquement.

4.- Ce sont des batteries ou des équipements d'accumulateurs électriques à courant continu ou transformable qui alimente les détecteurs de projection spéciale pour l'envoi de leur ordre à l'écran de données, cet dernier étant celui à programmer et à vérifier l'exactitude des mêmes.

Il y a aussi le câblage nécessaire pour l'interconnexion de ces components.

Ces éléments essentiels seront du type le plus adéquat pour qu'ils accomplissent cette finalité concrète, et c'est pour cela qu'on ne mentionnera pas de méthode ou de système pour éviter qu'une tierce personne puisse adapter d'autres components pour la méme finalité, ce que fairait tort morale et économique à l'inventeur du système, et c'est la raison d'éviter des possibles descriptions opératives des détecteurs et des enregistreurs.

On disposera aussi des moyens de connexion, de régulation des intensités ou des défauts, selon les conditions climatologiques au moment du calcul de la capacité.

Une fois suffissamment décrite la nature de l'invention, on fait constater que toute variante imaginée sur la même sera considérée dedans le cadre de protection légale de la même tant qu'elle n'altère ni modifie pas pour l'essentiel sa finalité caractéristique.

Dans ce système on utilise les matériaux les plus propres et les équipements les plus convénables en perfecte synchronie; les formes, dimensions et programmes de montage étant les plus convénables sans aucune limitation à ce sujet.

Finalement, on déclare ce modèle d'utilité comme d'application avantageuse en ce qu'il a de nouveau et d'utile, selon les suivantes:

**Revendications**

1. SYSTEME AUTOPORTANT DE CONTROLE DE PESAGE DE MARCHANDISES DE VEHICULES, caractérisé essentiellement en ce qu'il comprend la disposition de montage autoportant sur le châssis du véhicule, d'un équipement de détecteurs électroniques chargés, en combinaison et par leurs propres circuits, de contróler le pesage de la charge à la caisse du moyen de transport, dont les circuits sont alimentés par la batterie des mêmes et on envoie le contróle programmé à un écran prevu en une partie du véhicule quelconque, en entraînant d'une manière visible un contrôle visuel sélectif totalisé de la capacité ou charge à laquelle on est intéressé, ce système étant muni des connexions, des commutateurs et de l'alimentation électrique nécessaires.

2. SYSTEME AUTOPORTANT DE CONTROL DE PESAGE DE MARCHANDISES DE VEHICULES:

   Tel qu'il est décrit et révendiqué dans cette mémoire descriptive, qui conste de six feuilles foliotées et dactylographiées dans un seul côté ainsi que d'un dessin illustratif.

Fig. 1

**Office européen des brevets**

# RAPPORT DE RECHERCHE EUROPEENNE

Numero de la demande

EP    90 50 0106

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| X | EP-A-0 327 015 (W.TRENO)<br>* colonne 5, ligne 10 - ligne 38; figures 3,8 *<br>--- | 1,2 | G01G19/08 |
| X | EP-A-0 223 384 (WEIGHTWISE LTD)<br>* colonne 6, ligne 38 - ligne 47 *<br>* colonne 7, ligne 34 - ligne 51; figures 4,5 *<br>--- | 1,2 | |
| X | DE-A-3 611 189 (M. MÜLLER)<br>* colonne 2, ligne 21 - ligne 49; figure 3 *<br>--- | 1,2 | |
| X | FR-A-2 579 747 (A. SALOU)<br>* page 1, ligne 29 - page 2, ligne 15; figure *<br>--- | 1,2 | |
| X | EP-A-0 072 646 (LUCAS INDUSTRIES PUBLIC LTD CO.)<br>* page 9, ligne 12 - page 10, ligne 7; figures 6,7 * | 1,2 | |
| | ----- | | |

| | |
|---|---|
| | **DOMAINES TECHNIQUES RECHERCHES (Int. Cl.5 )** |
| | G01G |

Le présent rapport a été établi pour toutes les revendications

| Lieu de la recherche | Date d'achèvement de la recherche | Examinateur |
|---|---|---|
| LA HAYE | 26 NOVEMBRE 1991 | GANCI P.A. |

EPO FORM 1503 03.82 (P0402)